# EUROPEAN PATENT SPECIFICATION

(11) **EP 2 767 746 B1**
(45) Date of publication and mention of the grant of the patent: **29.06.2016**
(21) Application number: 13767920.5
(22) Date of filing: 29.01.2013
(51) Int. Cl.: F16L 11/04, F16L 11/12, B60K 15/01, F02M 37/00, B32B 27/32, B32B 1/08, F16L 11/11, F16L 11/06, C08L 23/10, B32B 27/08, B32B 27/34

(54) **RESIN FUEL TUBE**
HARZBRENNSTOFFLEITUNG
TUYAU POUR COMBUSTIBLE EN RÉSINE

(30) Priority: 26.03.2012 JP 2012069949
(43) Date of publication of application: 20.08.2014
(73) Proprietor: Sumitomo Riko Company Limited, Komaki, Aichi (JP)
(72) Inventor: YAJIMA Takashi, Komaki-shi Aichi 485-8550 (JP); MIZUTANI Koji, Komaki-shi Aichi 485-8550 (JP); KATAYAMA Kazutaka, Komaki-shi Aichi 485-8550 (JP)
(74) Representative: Müller-Boré & Partner Patentanwälte PartG mbB
(86) International application number: PCT/JP2013/051803
(87) International publication number: WO 2013/145837

(56) References cited:
- WO-A1-2012/115224
- WO-A1-2013/029699
- DE-A1-102010 037 570
- JP-A- H09 133 270
- JP-A- 2003 096 263
- JP-A- 2005 106 185
- JP-A- 2012 506 807
- US-A1- 2010 266 790

## Description

The present invention relates to a resin fuel tube to be used for fuel transport piping in a motor vehicle or the like.

Conventionally, metal pipes are used for fuel transport piping in a section of a motor vehicle such as an automobile where collision safety (impact resistance) is required. With a recent demand for weight reduction of automotive piping, however, it is contemplated to use resin tubes instead of the metal pipes.

As such a resin tube, an automotive fuel feed tube of resin (PLT1) is proposed, which includes a fuel feed tube body having an inner layer made of a polyamide resin, an ethylene vinyl alcohol resin or an ethylene vinyl alcohol elastomer, and an outer layer made of a modified polyethylene resin.

PLT1: JP-A-HEI11(1999)-48800

If the inner layer of the fuel feed tube of PLT1 is cracked by collision, however, the outer layer fuse-bonded to the inner layer is also cracked. This results in leakage of fuel outside the tube. Further, the outer layer of the fuel feed tube of PLT1 is mainly made of the polyethylene resin and, therefore, it is problematically impossible to use the fuel feed tube at an ambient temperature of 130°C or higher. If an attempt is made to impart the resin tube with impact resistance comparable to that of the metal pipe by increasing the wall thickness of the tube, on the other hand, the volume of the tube is increased due to the increase of the wall thickness of the tube. Therefore, the tube fails to meet the demand for the weight reduction.

In view of the foregoing, it is an object of the present invention to provide a light-weight resin fuel tube which is excellent in impact resistance and heat resistance and free from the fuel leakage, and is usable in an atmosphere at 130°C or higher, for example, in an engine room or the like.

The inventors of the present invention conducted intensive studies to provide a light-weight resin fuel tube which is excellent in impact resistance and free from the fuel leakage. In the course of the studies, the inventors focused on the structure of a resin layer, and found that the aforementioned object can be achieved by blending a polypropylene (A) prepared through polymerization with the use of a metallocene catalyst (hereinafter sometimes referred to as "metallocene polypropylene") and a polypropylene material (B) having a melting point of 137°C to 160°C in a predetermined ratio to provide a structure such that a soft structural portion (Y) of the metallocene polypropylene (A) intrudes into a space between crystalline structural portions (X) of the polypropylene material (B). Thus, the inventors attained the present invention.

According to the present invention, there is provided a resin fuel tube, which includes at least one resin layer, wherein the resin layer is made of a resin composition comprising: (A) a polypropylene prepared through polymerization with the use of a metallocene catalyst; and (B) a polypropylene material having a melting point of 137 °C to 160 °C, wherein a melting point of the component (B) is higher than a melting point of the component (A), wherein the melting point of the component (A) is outside the range of 137°C to 160°C, wherein the resin composition has a mixing weight ratio of the components (A) and (B) satisfying (A)/ (B) = 95/5 to 50/50, and wherein the resin layer has a structure such that a soft structural portion (Y) of the component (A) intrudes into a space between crystalline structural portions (X) of the component (B).

As described above, the resin layer (hereinafter sometimes referred to as "fast deformable resin layer") of the inventive resin fuel tube (hereinafter sometimes referred to simply as "fuel tube") is made of a blend of the highly ductile component (A) and the highly heat resistant component (B) (having a higher melting point), and has a structure such that the soft structural portion (Y) of the component (A) intrudes into the space between the crystalline structural portions (X) of the component (B). The higher-melting-point crystalline structural portions (X) maintain their structural characteristics and, in this state, the highly deformable soft structural portion (Y) intrudes into the space between the crystalline structural portions (X). Therefore, the inventive fuel tube has ductility (stretchability) attributable to the metallocene polypropylene (A) as well as heat resistance (higher melting point) attributable to the polypropylene material (B) having a melting point of 137°C to 160°C, and is excellent in shock absorbing capability. In the present invention, the fuel tube produced by using the metallocene polypropylene (A) has a higher heat resistant temperature and a higher breaking strength than a fuel tube produced by using a polyethylene prepared through polymerization with the use of the metallocene catalyst (metallocene polyethylene). Thus, the fuel tube can be used in a wider variety of application sites.

Where the resin composition forming the resin layer comprises an ionic liquid, the fuel tube is improved in electrical conductivity, making it possible to prevent spark which may otherwise occur due to electrostatic charges during refueling. This improves the safety.

FIG. 1 is a schematic diagram showing the structure of a resin layer of an inventive resin fuel tube in which a soft structural portion intrudes into a space between crystalline structural portions.
FIG. 2 is a diagram showing an exemplary structure of the inventive resin fuel tube.
FIG. 3 is a diagram showing another exemplary structure of the inventive resin fuel tube.

Next, an embodiment of the present invention will be described in detail. However, the present invention is not limited to this embodiment.

A resin fuel tube according to the present invention may include at least one resin layer (fast deformable resin layer).

In the present invention, the resin layer is made of a resin composition, which comprises:
(A) a polypropylene prepared through polymerization with the use of a metallocene catalyst; and
(B) a polypropylene material having a melting point of 137°C to 160°C, and has a mixing weight ratio of the components (A) and (B) satisfying (A)/(B) = 95/5 to 50/50.

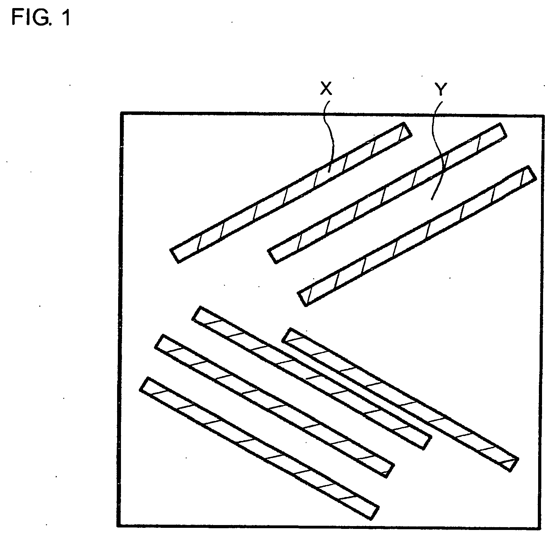

In the present invention, the resin layer has a structure such that a soft structural portion (Y) of the component (A) intrudes into a space between crystalline structural portions (X) of the component (B) as shown in FIG. 1.

The structure shown in FIG. 1 can be observed, for example, by means of a transmission electron microscope.

In the present invention, the expression "a soft structural portion (Y) of the component (A) intrudes into a space between crystalline structural portions (X) of the component (B)" means that the soft structural portion (Y) is not necessarily required to completely fill the space between the crystalline structural portions (X) but may be present in a space between some of the crystalline structural portions (X).

The crystalline structural portions (X) are generally spaced a distance of 10 to 500 nm from each other for proper balance between the strength and the impact resistance. If the distance between the crystalline structural portions (X) is excessively great, the fuel tube tends to be too soft and have a lower strength and a lower melting point. If the distance between the crystalline structural portions (X) is excessively small, the fuel tube tends to be too hard and have a lower impact resistance.

The distance between the crystalline structural portions (X) may be measured, for example, by means of a transmission electron microscope.

Next, the material (resin composition) for formation of the resin layer will be described. «Polypropylene (A) prepared through polymerization with the use of metallocene catalyst»

The polypropylene prepared through the polymerization with the use of the metallocene catalyst (metallocene polypropylene) for use in the present invention is excellent in impact resistance and flexibility as compared with ordinary polypropylenes (homopolypropylenes, random polypropylenes, block polypropylenes and the like) prepared through polymerization without the use of the metallocene catalyst.

The metallocene polypropylene (A) generally has a specific gravity of 0.88 to 0.91, preferably 0.89 to 0.90.

The specific gravity is herein defined as a value determined based on ISO 1183 (this definition is also applicable to the following description).

### <<Specific polypropylene material (B)>>

The specific polypropylene material (B) has a melting point of 137°C to 160°C, preferably 137°C to 159°C. If the melting point of the polypropylene material is excessively low, it is impossible to provide the effect of improving the heat resistance of the metallocene polypropylene (A). If the melting point is excessively high, the high-speed tensile elongation is poorer.

The specific polypropylene material (B) generally has a specific gravity of 0.86 to 0.91, preferably 0.87 to 0.90.

Examples of the specific polypropylene material (B) include random polypropylenes and the like.

A homo-PP having a melting point outside the range of 137°C to 160°C does not fall under the category of the specific polypropylene material (B). A homo-PP having a higher melting point has a lower impact resistance than the specific polypropylene material (B) and, therefore, cannot be used as the material for the inventive fuel tube.

The metallocene polypropylene (A) has a melting point outside the range of 137°C to 160°C and, therefore, does not fall under the category of the specific polypropylene material (B).

The mixing weight ratio of the components (A) and (B) is (A) / (B) = 95/5 to 50/50, preferably (A) / (B) = 90/10 to 60/40. If the mixing weight ratio of the component (A) is excessively low (the mixing weight ratio of the component (B) is excessively high), the high-speed tensile elongation is poorer. If the mixing weight ratio of the component (A) is excessively high (the mixing weight ratio of the component (B) is excessively low), the strength and the resistance to gasoline are reduced.

In addition to the components (A) and (B), an ionic liquid may be blended in the resin composition for the formation of the resin layer. By blending the ionic liquid, electrostatic charges which may occur during refueling can be grounded. This improves the safety.

Preferred examples of the ionic liquid include ionic liquids having a cation of a 6- or 5-membered ring compound or an aliphatic compound and a corresponding anion, such as 1-ethyl-3-methylimidazolium tetrafluoroborate, 1-hexyl-3-methylimidazolium trifluoromethanesulfonate, 1-hexylpyridium chloride, N,N,N-trimethyl-N-propylammonium bis(trifluoromethanesulfonyl)imide, which may be used either alone or in combination.

The ionic liquid functions like aplasticizer, and is present in the soft structural portion (Y) of the component (A). Even with a small amount of the ionic liquid, it is possible to impart the soft structural portion (Y) with electrical conductivity. The ionic liquid hardly influences the hardness of the soft structural portion (Y) as compared with a case where carbon black is used.

The proportion of the ionic liquid is preferably 0.1 to 5 parts by weight, particularly preferably 0.1 to 1 part by weight, based on 100 parts by weight of the total of the components (A) and (B).

For colorization, a small amount of carbon black may be added to the resin composition for the formation of the resin layer. The soft structural portion (Y) of the metallocene polypropylene (A) is relatively hard and, therefore, has no room into which the carbon black intrudes.

The carbon black preferably has a primary average particle diameter of 10 to 100 nm, particularly preferably 20 to 70 nm, for strength and dispersibility.

As required, an anti-oxidation agent, an anti-aging agent, a pigment, a dye, a filler and/or a processing aid may be blended in the resin composition for the formation of the resin layer.

The inventive fuel tube may be produced, for example, in the following manner. The metallocene polypropylene (A), the specific polypropylene material (B) and, optionally, the ionic liquid and the like are blended and pelletized by means of a twin screw extruder, and the resulting pelletized material is extruded into a tube by means of a tube extruder. As required, a middle portion of the tube is formed into a bellows structure by means of a corrugator.

Where carbon black is blended, a twin screw extruder with a forced side feeder is prepared, and a small amount of carbon black is added to the metallocene polypropylene (A), the specific polypropylene material (B) and the like from the forced side feeder during the extrusion. Then, the resulting material is extruded into the tube.

The inventive fuel tube may have a single layer structure including the specific resin layer alone, or may have a multilayer structure including two or more layers including the specific resin layer and a second resin layer. Where the tube has a multilayer structure having two or more layers, the specific resin layer is preferably provided as an outermost layer. Where the tube has a multilayer structure having two or more layers, the specific resin layer and the second resin layer are preferably substantially in a non-bonded state.

The expression "a non-bonded state" is not limited to a state such that the specific resin layer and the second resin layer are not bonded to each other at all, but means a state such that the resin layers are bonded to each other so as to be separable from each other when the tube receives impact due to collision or the like. For example, the non-bonded state is intended to include a state such that the resin layers are spot-bonded to each other.

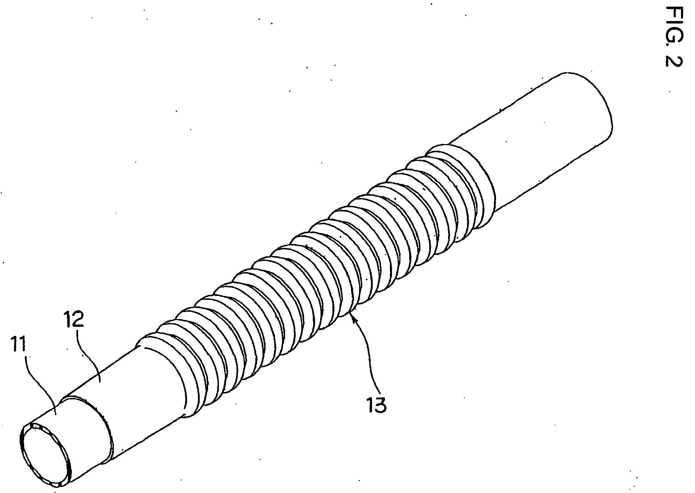

For example, the inventive fuel tube includes a tubular inner layer 11 and an outer layer 12 provided on an outer peripheral surface of the tubular inner layer 11 substantially in the non-bonded state, and has a bellows portion 13 provided in the middle portion thereof as shown in FIG. 2. In the present invention, the outer layer 12 is preferably the specific resin layer described above.

### <<Inner layer material>>

The inner layer material is preferably a fuel-resistant resin such as a polyamide resin which is insoluble in the fuel, strong enough to prevent withdrawal of the tube in an assembly portion, and non-adhesive to the specific polypropylene material (B) of the outer layer (resin layer).

### <Polyamide resin>

Examples of the polyamide resin include polyamide-6 (PA6), polyamide-46 (PA46), polyamide-66 (PA66), polyamide-92 (PA92), polyamide-99 (PA99), polyamide-610 (PA610), polyamide-612 (PA612), polyamide-1010 (PA1010), polyamide-11 (PA11), polyamide-912 (PA912), polyamide-12 (PA12), copolymers of polyamide-6 and polyamide-66 (PA6/66), copolymers of polyamide-6 and polyamide-12 (PA6/12) and aromatic nylons, which may be used either alone or in combination. Among these, the polyamide-11 or the polyamide-12 is preferred because of lower permeability to the fuel and higher flexibility.

The inventive fuel tube is dimensioned as follows:
The inventive fuel tube preferably has a total wall thickness of 0.5 to 3.2 mm, particularly preferably 1.0 to 3.2 mm.

Where the fuel tube has a double layer structure including the inner layer 11 and the outer layer 12 as shown in FIG. 2, the inner layer 11 generally has a thickness of 0.1 to 2.0 mm, preferably 0.2 to 1.8 mm, and the outer layer 12 generally has a thickness of 0.4 to 1.2 mm, preferably 0.8 to 1.4 mm. The thickness of the outer layer 12 is preferably 20 to 140 %, particularly preferably 30 to 140 %, of the thickness of the inner layer 11.

The overall length of the inventive fuel tube is not particularly limited, because it is designed according to the layout in an automobile. The overall length of the bellows portion is determined in consideration of assembling tolerance and workability.

The inventive resin fuel tube may include an innermost layer provided in an inner peripheral surface thereof as having a single layer structure or a multilayer structure.

A material for formation of the innermost layer is preferably a resin having a fuel permeation resistance, and examples thereof include fluororesins such as THV (thermoplastic fluororesins of terpolymers of vinylidene fluoride, hexafluoropropylene and tetrafluoroethylene), ETFE (copolymers of ethylene and tetrafluoroethylene) and PVDF (polyvinylidene fluoride), EVOH (ethylene vinyl alcohol), PPS (polyphenylene sulfide), PBN (polybutylene naphthalate) and PBT (polybutylene terephthalate). The innermost layer material may be the same as the inner layer material (fuel-resistant resin such as a polyamide resin).

The innermost layer generally has a thickness of 0.05 to 0.5 mm, preferably 0.1 to 0.4 mm.

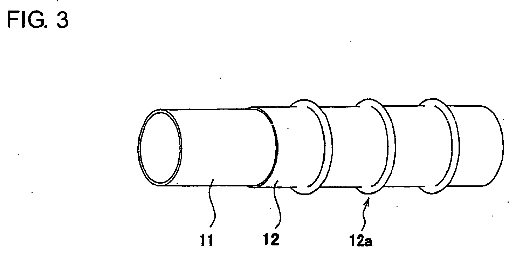

As shown in FIG. 3, the inventive fuel tube may have a plurality of projection rings (like so-called bamboo joints, generally 2 to 50 projection rings, e.g., 3 projection rings in FIG. 3) 12a provided at predetermined intervals (generally, 5 to 50 mm) as each extending circumferentially of the outer layer 12 (perpendicularly to the length of the fuel tube) for improvement of the impact resistance. The projection rings 12a are preferably made of the same material as the outer layer 12, and formed integrally with the outer layer 12, for example, by means of a corrugator.

### EXAMPLES

Next, inventive examples will be described in conjunction with comparative examples. However, the present invention is not limited to these examples. In the examples, "parts" are based on weight.

Prior to the description of the inventive examples and the comparative examples, the preparation of materials for resin layers will be described below.

### <<Metallocene PP (A)>>

[Metallocene PP (A1)] WELNEX RFG4VA (having a melting point of 129°C and a specific gravity of 0.89) available from Japan Polypropylene Corporation
[Metallocene VLDPE (A'1)] KERNEL KF261T (having a melting point of 90°C and a specific gravity of 0.90) available from Japan Polyethylene Corporation

### <<Polypropylene material (B) having a melting point of 137°C to 160°C >>

[Polypropylene material (B1)] S131 (having a melting point of 137°C and a specific gravity of 0.90) available from Sumitomo Chemical Co., Ltd.
[Polypropylene material (B2)] EG7F (having a melting point of 142°C and a specific gravity of 0.90) available from Japan Polypropylene Corporation
[Polypropylene material (B3)] THERMORUN 3555N (having a melting point of 156°C and a specific gravity of 0.88) available from Mitsubishi Chemical Corporation
[Polypropylene material (B4)] EX5C (having a melting point of 160°C and a specific gravity of 0.90) available from Japan Polypropylene Corporation

[Lower-melting-point polypropylene material (B'1) Modified PP (ADMER QF551 available from Mitsui Chemicals, Inc. and having a melting point of 135°C and a specific gravity of 0.89)
[Higher-melting-point polypropylene material (B'2)] Homo-PP (MA3H available from Japan Polypropylene Corporation and having a melting point of 163°C and a specific gravity of 0.90)

[Hindered phenol anti-oxidation agent] IRGANOX 1010 (having a specific gravity of 1.17) available from Ciba Japan K.K.

### [Ionic liquid]

N,N,N-trimethyl-N-propylammonium bis(trifluoromethanesulfonyl)imide available from Kanto Chemical Co., Inc.

### [Example 1]

A twin screw extruder with a forced side feeder (TEX30α available from Japan Steel Works, Ltd.) was prepared, and 95 parts of the metallocene PP (A1), 5 parts of the polypropylene material (B1) and 1 part of the anti-oxidation agent were blended, extruded and pelletized. By means of a tube extruder (GT-40 available from Plastic Engineering Laboratories) connected to a corrugator (available from Colmar), the resulting pelletized material was extruded into a tube, and a bellows structure was formed in a middle portion of the tube. Thus, a fuel inlet pipe of a single layer structure was produced, which had a middle bellows portion and opposite end straight portions.

The straight portions of the fuel tube each had an inner diameter of 32 mm, and an outer diameter of 34.8 mm. The resin layer had a thickness of 1.4 mm. The bellows portion had an outer diameter of 38 mm, and a length of 50 mm. The fuel tube had an overall length of 150 mm.

### [Examples 2 to 6 and Comparative Examples 1 to 10]

Fuel tubes were produced in substantially the same manner as in Example 1, except that materials for resin layers were used in different combinations as shown in Tables 1 and 2.

### [Example 7]

A fuel inlet pipe of a triple layer structure including a resin layer and an inner layer (inner and outer sublayers) provided on an inner periphery of the resin layer was produced. More specifically, as shown below in Table 1, 95 parts of the metallocene PP (A1), 5 parts of the polypropylene material (B3) and 1 part of the anti-oxidation agent were blended, extruded and pelletized to prepare a resin layer material. Further, ETFE (FLUON AH2000 available from Asahi Glass Co. , Ltd.) was prepared as an inner layer (inner sublayer) material, and PA12 (UBESTA 3035JU3 available from Ube Industries, Ltd.) was prepared as an inner layer (outer sublayer) material. By means of a multilayer tube extruder (GT-40 available from Plastic Engineering Laboratories) connected to a corrugator (available from Colmar), these materials were coextruded into a tube of triple layer structure, and a bellows structure was formed in a middle portion of the tube. Thus, a fuel inlet pipe of a triple layer structure was produced, which had a middle bellows portion and opposite end straight portions.

The straight portions of the fuel tube each had an inner diameter of 32 mm, and an outer diameter of 34.8 mm. The inner sublayer of the inner layer had a thickness of 0.1 mm, and the outer sublayer of the inner layer had a thickness of 0.6 mm. The resin layer (fast deformable resin layer) had a thickness of 0.7 mm. The bellows portion had an outer diameter of 38 mm and a length of 50 mm. The fuel tube had an overall length of 150 mm. The inner layer (outer sublayer) was not bonded to the resin layer (fast deformable resin layer).

**Table 1**

| (Part(s)) | | | | | | | |
|---|---|---|---|---|---|---|---|
| | Example | | | | | | |
| | 1 | 2 | 3 | 4 | 5 | 6 | 7 |
| Inner layer (Inner sublayer) | | | | | | | |
| ETFE | No | No | No | No | No | No | Yes |
| Inner layer (Outer sublayer) | | | | | | | |
| PA12 | No | No | No | No | No | No | Yes |
| Resin layer (Fast deformable layer) | | | | | | | |
| Metallocene PP (A1) | 95 | 95 | 95 | 50 | 95 | 95 | 95 |
| Metallocene VLDPE (A'1) | - | - | - | - | - | - | - |
| Polypropylene material (B1) | 5 | - | - | - | - | - | - |
| Polypropylene material (B2) | - | 5 | - | - | - | - | - |
| Polypropylene material (B3) | - | - | 5 | 50 | - | 5 | 5 |
| Polypropylene material (B4) | - | - | - | - | 5 | - | - |
| Lower-melting-point polypropylene material (B'1) | - | - | - | - | - | - | - |
| Higher-melting-point polypropylene material (B'2) | - | - | - | - | - | - | - |
| Anti-oxidation agent | 1 | 1 | 1 | 1 | 1 | 1 | 1 |
| Ionic liquid | - | - | - | - | - | 1 | - |
| Evaluation items | | | | | | | |
| Elongation (%) | >300 | >300 | >300 | >300 | >300 | >300 | >300 |
| Evaluation | ○ | ○ | ○ | ○ | ○ | ○ | ○ |
| Electrical conductivity (Volume resistivity) (Ωm) | 1×10¹¹ | 1×10¹¹ | 1×10¹¹ | 1×10¹¹ | 1×10¹¹ | 1×10⁹ | 1×10¹¹ |
| Heat resistance | ○ | ○ | ○ | ○ | ○ | ○ | ○ |

**Table 2**

| (Part(s)) | | | | | | | | | | |
|---|---|---|---|---|---|---|---|---|---|---|
| | Comparative Example | | | | | | | | | |
| | 1 | 2 | 3 | 4 | 5 | 6 | 7 | 8 | 9 | 10 |
| Inner layer (Inner sublayer) | | | | | | | | | | |
| ETFE | No | No | No | No | No | No | No | No | No | No |
| Inner layer (Outer sublayer) | | | | | | | | | | |
| PA12 | No | No | No | No | No | No | No | No | No | No |
| Resin layer (Fast deformable layer) | | | | | | | | | | |
| Metallocene PP (A1) | 100 | - | - | - | 40 | 40 | 40 | 50 | 50 | - |
| Metallocene VLDPE (A'1) | - | - | - | - | - | - | - | - | - | 100 |
| Polypropylene material (B1) | - | 100 | - | - | 60 | - | - | - | - | - |
| Polypropylene material (B2) | - | - | 100 | - | - | 60 | - | - | - | - |
| Polypropylene material (B3) | - | - | - | 100 | - | - | 60 | - | - | - |
| Polypropylene material (B4) | - | - | - | - | - | - | - | - | - | - |
| Lower-melting-point polypropylene material (B'1) | - | - | - | - | - | - | - | 50 | - | - |
| Higher-melting-point polypropylene material (B'2) | - | - | - | - | - | - | - | - | 50 | - |
| Anti-oxidation agent | 1 | 1 | 1 | 1 | 1 | 1 | 1 | 1 | 1 | 1 |
| Ionic liquid | - | - | - | - | - | - | - | - | - | - |
| Evaluation items | | | | | | | | | | |
| Elongation (%) | >300 | 0 | 0 | 0 | 150 | 150 | 250 | 250 | 50 | >300 |
| Evaluation | ○ | × | × | × | × | × | × | × | × | ○ |
| Electrical conductivity (Volume resistivity) (Ωcm) | 1×10¹¹ | 1×10¹¹ | 1×10¹¹ | 1×10¹¹ | 1×10¹¹ | 1×10¹¹ | 1×10¹¹ | 1×10¹¹ | 1×10¹¹ | 1x10¹¹ |
| Heat resistance | × | ○ | ○ | ○ | ○ | ○ | ○ | × | ○ | × |

The products of Examples and Comparative Examples thus produced were evaluated for characteristic properties on the basis of the following criteria. The results are shown above in Tables 1 and 2.

### [High-Speed Tensile Elongation]

The fuel tubes were each set in a high-speed tensile tester (IM100 available from IMATECK), and a high-speed tensile test was performed (at 13 m/s) in a steady state (at 20°C) to measure an elongation. In evaluation, a product having an elongation of not less than 300 % (>300) was rated as acceptable (○), and a product having an elongation of less than 300 % was rated as unacceptable (×).

### [Electrical Conductivity (Volume Resistivity)]

The volume resistivity was measured in conformity with JIS K6271 by a double ring measurement method which is designed to measure the electrical resistivity between ring electrodes. The measurement was performed one minute after application of 500 V between the electrodes.

### [Heat Resistance]

In a heat resistance test, the fuel tubes were each maintained in a constant temperature aging chamber at 130°C for two hours, and then visually checked for melting. In evaluation, a product kept intact was rated as acceptable (○), and a product suffering from deformation and/or melting was rated as unacceptable (×).

The results shown in the above tables indicate that the products of Examples 1 to 6 were not broken with excellent elongation and excellent impact resistance. Therefore, the products of Examples are unlikely to cause fuel leakage at collision. Excellent characteristic properties of the products of Examples are supposedly attributable to the ductility of the metallocene PP (A). The crystalline structural portions of the polypropylene material (B) having a melting point of 137°C to 160°C formed a skeleton of each of the resin layers, so that the products of Examples were free from melting in the heat resistance test. The product of Example 6 was produced by using the ionic liquid and, therefore, had an improved electrical conductivity. The inner layer (inner and outer sublayers) of the product of Example 7 was broken, but the resin layer (fast deformable resin layer) had excellent ductility, because the inner layer (outer sublayer) and the resin layer (fast deformable resin layer) were not bonded to each other.

The structures of the products of Examples were each observed by means of a transmission electron microscope (HF-3300 available from Hitachi High Technologies Corporation). As a result, it was confirmed that the products of Examples each had a structure such that a soft structural portion (Y) of the component (A) intrudes into a space between crystalline structural portions (X) of the component (B).

On the other hand, the product of Comparative Example 1, which was produced by using the metallocene PP (A1) but not using the polypropylene material (B) having a melting point of 137°C to 160°C, suffered from deformation in the heat resistance test.

The products of Comparative Examples 2 to 4, which were produced by using the polypropylene material (B) having a melting point of 137°C to 160°C but not using the metallocene PP (A), were poorer in elongation.

The products of Comparative Examples 5 to 7, in which the metallocene PP (A1) was blended in excessively small proportions, were poorer in elongation.

The product of Comparative Example 8, which was produced by using the lower-melting-point polypropylene material (B'1) having a melting point of 135°C, suffered from deformation without the heat-resistance improving effect of the metallocene PP (A) when being maintained at 130°C for two hours.

The product of Comparative Example 9, which was produced by using the higher-melting-point polypropylene material (B'2) having a melting point of 163°C, was poorer in elongation.

The product of Comparative Example 10, which was produced by using the metallocene VLDPE (A'1) instead of the metallocene PP (A) but not using the polypropylene material (B) having a melting point of 137°C to 160°C, suffered from melting in the heat resistance test.

While specific forms of the embodiment of the present invention have been shown in the aforementioned inventive examples, the inventive examples are merely illustrative of the invention but not limitative of the invention. It is contemplated that various modifications apparent to those skilled in the art could be made within the scope of the invention.

The inventive fuel tube is used for fuel transport piping in a motor vehicle such as an automobile. For example, the inventive fuel tube may be used as a feed tube, a filler neck pipe, an inlet tube, a filler hose, an ORVR tube, a purge tube or a breather tube, preferably as the feed tube or the purge tube on an engine side.

### REFERENCE SIGNS LIST

X: Crystalline structural portions
Y: Soft structural portion

## Claims

1. A resin fuel tube comprising at least one resin layer,
wherein the resin layer is made of a resin composition comprising:
(A) a polypropylene prepared through polymerization with the use of a metal-locene catalyst; and
(B) a polypropylene material having a melting point of 137°C to 160°C,
wherein a melting point of the component (B) is higher than a melting point of the component (A),
wherein the melting point of the component (A) is outside the range of 137°C to 160°C,
wherein the resin composition has a mixing weight ratio of the components (A) and (B) satisfying (A)/(B) = 95/5 to 50/50, and
wherein the resin layer has a structure such that a soft structural portion (Y) of the component (A) intrudes into a space between crystalline structural portions (X) of the component (B).

2. The resin fuel tube according to claim 1, wherein the resin composition forming the resin layer further comprises an ionic liquid.

## Patentansprüche

1. Harz-Brennstoffrohr, umfassend mindestens eine Harzschicht,
wobei die Harzschicht aus einer Harzzusammensetzung hergestellt ist, umfassend:
(A) ein Polypropylen, bereitgestellt durch Polymerisation unter Verwendung eines Metallocen-Katalysators; und
(B) ein Polypropylenmaterial mit einem Schmelzpunkt von 137°C bis 160°C, wobei ein Schmelzpunkt der Komponente (B) höher ist als ein Schmelzpunkt der Komponente (A),
wobei der Schmelzpunkt der Komponente (A) außerhalb des Bereichs von 137°C bis 160°C liegt,
wobei die Harzzusammensetzung ein Mischungsgewichtsverhältnis der Komponenten (A) und (B) aufweist, welches (A)/(B) = 95/5 bis 50/50 genügt, und wobei die Harzschicht eine Struktur aufweist, so dass eine weiche Struktureinheit (Y) der Komponente (A) in einen Raum zwischen kristallinen Struktureinheiten (X) der Komponente (B) eindringt.

2. Harz-Brennstoffrohr nach Anspruch 1, wobei die die Harzschicht bildende Harzzusammensetzung ferner eine ionische Flüssigkeit umfasst.

## Revendications

1. Un tube de carburant en résine comprenant au moins une couche de résine, dans lequel la couche de résine est faite d'une composition de résine comprenant :
(A) un polypropylène préparé par polymérisation en utilisant un catalyseur métallocène ; et
(B) un matériau polypropylène ayant un point de fusion de 137°C à 160°C, dans lequel le point de fusion du composant (B) est plus grand que le point de fusion du composant (A),
dans lequel le point de fusion du composant (A) est situé en dehors de l'intervalle de 137°C à 160°C,
dans lequel la composition de résine a un rapport pondéral de mélange des composés (A) et (B) satisfaisant (A)/(B) = 95/5 à 50/50, et
dans lequel la couche de résine a une structure telle qu'une portion structurelle molle (Y) du composé (A) s'immisce dans un espace entre les parties structurelles cristallines (X) du composé (B).

2. Le tube de carburant en résine selon la revendication 1, dans lequel la composition de résine formant la couche de résine comprend en outre un liquide ionique.
